**Europäisches Patentamt**

**European Patent Office**

**Office européen des brevets**

(11) Veröffentlichungsnummer: **0 669 392 B1**

(12) **EUROPÄISCHE PATENTSCHRIFT**

(45) Veröffentlichungstag der Patentschrift: **13.12.95**

(51) Int. Cl.6: **C11D 3/40**, B28C 7/00

(21) Anmeldenummer: **94102841.7**

(22) Anmeldetag: **25.02.94**

(54) **Verfahren und Kennzeichnen von schüttfähigen Stoffen und Kennzeichnungskörper zum Durchführen des Verfahrens**

(43) Veröffentlichungstag der Anmeldung:
**30.08.95 Patentblatt 95/35**

(45) Bekanntmachung des Hinweises auf die Patenterteilung:
**13.12.95 Patentblatt 95/50**

(84) Benannte Vertragsstaaten:
**AT BE CH DE DK ES FR GB IT LI NL**

(56) Entgegenhaltungen:
**GB-A- 2 235 206**

(73) Patentinhaber: **AKTUAL BAUTEILE UND UM-WELTSCHUTZSYSTEME GmbH & Co. KG
Lindenweg 90
D-25436 Tornesch (DE)**

(72) Erfinder: **Siegert, Paul
Akazienweg 1
D-25421 Pinneberg (DE)**

(74) Vertreter: **Fleck, Thomas, Dr. Dipl.-Chem. et al
Raffay & Fleck, Patentanwälte,
Postfach 32 32 17
D-20117 Hamburg (DE)**

EP 0 669 392 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft ein Verfahren zum Kennzeichnen und Identifizieren von schüttfähigen Stoffen ihrer Herkunft und/oder Qualität nach sowie die Verwendung von Fremd- oder Kennzeichnungskörpern zum obenerwähnten Kennzeichnen und Identifizieren.

Aus der GB-A-2,235,206 ist ein Reinigungsmittelsystem bekannt, bestehend aus zwei oder mehr Komponenten, die separat und in unterteilten bzw. portionierten Dosiermengen verpackt sind, wobei jede Komponente eine andere Farbe besitzt, um sie von den anderen beim Dosieren zu unterscheiden. Das System kann eine Meßeinrichtung enthalten, die Meßstriche für jede Komponente aufweist, die Meßstriche sind entsprechend der Farbe der jeweiligen Komponente farbig markiert, um die Dosierung sicherzustellen. Vorteilhafterweise sollte die Verpackung der jeweiligen Komponente auch entsprechend farbig sein, wobei eine Dosieranleitung geliefert werden kann, um die benötigten Mengen jeder Komponente entsprechend den Waschbedingungen anzugeben. Ein solches Mehrkomponentenreinigungsmittel dient jedoch nicht dazu, die schüttfähigen Stoffe selbst, ihrer Herkunft und/oder Qualität nach zu kennzeichnen oder gar zu einem Zeitpunkt zu identifizieren, der nach dem Gebrauch des Systems liegt. Nach dieser vorbekannten Lehre sollen die verschiedenfarbigen Komponenten eindeutig die von dem Verschmutzungsgrad des zu waschenden Gutes oder der Wasserqualität abhängige Dosierung der Anteilsmengen erleichtern. Nach Gebrauch dieses Mehrkomponentenreinigungsmittels tritt der sofortige und homogene Untergang sämtlicher Komponenten in der Waschlauge ein.

Es ist häufig wünschenswert, schüttfähige Stoffe, die häufig in großer Menge anfallen, und bei denen es sich auch um Naturstoffe handeln kann, hinsichtlich ihres Ursprungs und ihrer Qualität zu kennzeichnen. Hierzu kann man sich Aufzeichnungen machen oder beispielsweise Schilder anfertigen, auf denen entsprechende Vermerke gemacht werden, was relativ kompliziert und unvorteilhaft ist, da solche Aufzeichnungen oder Schilder verlorengehen können. Selbst detaillierte Beschreibungen solcher Stoffe auf Lieferscheinen und/oder Rechnungen bzw. Verpackungen helfen nicht weiter. So werden beispielsweise bei Begrünungen, und insbesondere Dachbegrünungen, Substrate, Drainageschütt- und Füllstoffe von unterschiedlicher Qualität eingesetzte Diese Qualitäten beruhen auf speziellen Ausgangsmaterialien, Rezepturen und Herstellungsverfahren. In der allgemeinen Praxis sind die bauleitenden Planer Architekten oder Auftraggeber nicht in der Lage, die Qualität oder die Herkunft der eingesetzten Stoffe zu beurteilen. Das augenscheinliche Aussehen oder die durch Handprobe ertastbare Beschaffenheit ist in der Regel manchmal sogar von Charge zu Charge unterschiedlich infolge wechselnden Aussehensder natürlichen Stoffe , unterschiedlicher Provenienzen und häufig wechselnden Feuchtigkeitsgehalten. Dennoch ist es für die Verantwortlichen praktisch unerläßlich schon bei Lieferung und Einbau zu erkennen, ob die beauftragte Qualität auch tatsächlich geliefert und eingebaut wird, zumal die Architekten eine langfristige Planungshaftung tragen. Die Auftraggeber sollten erwarten dürfen, daß die zugesagten Eigenschaften oder Wirkungen auch tatsächlich gegeben sind. Objektiv lassen sich die Eigenschaften oder Beschaffenheiten solcher Substrate oder Stoffe bislang nur durch Analysen bei Fachinstituten annähernd bestimmen. Diese Untersuchungsverfahren können aber mehrere Wochen oder Monate dauern und verursachen Kosten, die je nach Objektgröße den Materialpreis übersteigen können. Verständlicherweise sind hochqualitative Substrate und Drainageschüttstoffe wesentlich teurer als solche mit geringer Qualität. Es dürfte deshalb einleuchten, daß es von Vorteil und wichtig ist, solche schüttfähigen Stoffe ihrer Herkunft und/oder Qualität nach schnell und leicht kenntlich zu machen, so daß sich auch nach erfolgtem Verkauf unabhängig ob lose oder verpackt geliefert wird und Verwendung bzw. beim Einbau feststellen läßt, woher sie stammen, daß sie in ihrer Wirkung nicht beeinträchtigt wurden, obwohl ihr Gesamtaussehen gegebenenfalls beträchtlich verändert sein kann.

Diese Aufgabe wird durch das im Anspruch 1 gekennzeichnete Verfahren bzw. durch die im Anspruch 5 beschriebene Verwendung erfindungsgemäß gelöst.

Die Erfindung liefert also ein einfaches, sauberes Verfahren, das schnell und preiswert durchgeführt werden kann, und die Identifizierung des Schüttgutes bei Lieferung und Einbau ggf. aber auch noch nach Jahren erlaubt, so daß sein Ursprung und seine Qualität mit Sicherheit festgestellt werden kann. Verständlicherweise werden dabei nur gerade soviele Fremd- oder Kennzeichnungskörper eingesetzt, die eine Identifizierung innerhalb einer vernünftigen Zeitspanne ermöglichen, ohne daß zu sehr gesucht werden muß. Da diese Kennzeichnungskörper künstlich und zudem nicht oder nur schwer abbaubar sind und sie nur in geringsten Mengen vorliegen, wird die Funktion des schüttfähigen Stoffes hierdurch nicht beeinträchtigt. Ebenfalls ist es dabei nur logisch, daß diese Kennzeichnungskörper hinsichtlich ihrer Farbe oder Konsistenz von den schüttfähigen Stoffen abweichen müssen, damit man sie eben erkennen kann: Sie sind insofern also Fremdstoffe.

Wenn also einige Kennzeichnungskörper/m$^3$ zugegeben worden sind, erkennt man sie bei Lieferung und Einbau an der Schüttgutoberfläche. Weiter können zu jedem beliebigen Zeitpunkt durch Ausbreiten des Schüttgutes auf etwas größerer Oberfläche die Kennzeichnungskörper zum Vorschein gebracht werden, so daß sie dann an der Oberfläche - pro m² gerechnet - sichtbar werden und eine sichere Identifikation ermöglichen.

In der Verwendungspraxis solcher schüttfähigen Stoffe kann es auch wünschenswert sein, daß solche Kennkörper in Materialien nur zum Zeitpunkt der Lieferung oder wenige Tage, bzw. Wochen, nach dem Einbau solcher Stoffe Bestand haben sollen.

Als Materialien für solche rasch oder mittelfristig abbaubaren Kennkörper kämen in Frage z.B.:

- Papier oder Pappe, was je nach temporärem Feuchtegehalt des Schüttstoffes in wenigen Tagen oder Wochen abgebaut wäre.
- Weiter wären solche Kennkörper beispielsweise aus Mais- oder Kartoffelstärke denkbar. So bestehen z.B. im Pharmabereich sehr viele Tabletten, die sich schnell vor oder nach der Einnahme auflösen sollen, zu einem hohen Prozentsatz aus Stärke als Trägerstoff.

Solche Kennkörper würden je nach Größe des Kennkörpers und den verwendeten Bindemitteln ebenfalls innerhalb weniger Stunden, Tage oder Wochen zerfallen sein.

Ein Beispiel für den mittelfristigen Bestand solcher Kennkörper, z.B. aus Stärke, wären die beim Golf verwendeten "Putt-Einsätze". Diesen Einsätzen wird nachgesagt, daß sie sich mit Sicherheit innerhalb einer Vegetationsperiode, bzw. eines Jahres, zersetzt haben.

Daß die Wahrscheinlichkeit mit steigender Anzahl der Kennzeichnungskörper erhöht wird, ist selbstverständlich.

Weitere Vorteile und Merkmale, die sich insbesondere auf die Art der schüttfähigen Stoffe, die Menge der Kennzeichungskörper und ihre Struktur oder Gestalt beziehen, sind in den Unteransprüchen angeführt, die ggf. auch im Zusammenhang mit dem Hauptanspruch von erfinderischer Bedeutung sind.

Im folgenden werden verschiedene Beispiele der Erfindung näher beschrieben.

Die folgenden Beispiele beziehen sich auf Substrate, die einen oder mehrere der folgenden Bestandteile, wie Torf,Rindenhumus, sog. Oberboden oder Unterboden, Lava, Kalksteingruß bzw. -split, Bims, Blähton, Blähschiefer mineralische oder organisch Recycling-Stoffe, Vermiculite, Düngemittel, weitere Wirkungsverbesserer etc. enthalten. Verständlicherweise können die Substrate unterschiedlich zusammengesetzt sein entsprechend den verschiedensten Anwendungsbereichen, wie z.B. bei intensiven Dachbegrünungen und Pflanzgefäßen für höchste Pflanzenansprüche, extensive Dachbegrünungen mit anspruchsvoller Vegetation, auch mit geringeren Pflanzenansprüchen, sowie für die Begrünung von Tiefgaragen mit Substratdicken von ca. 25 bis 50 cm, oder als Füllsubstratschicht unter einem Tiefgaragensubstrat ab ca. 50 cm Tiefe, sowie als Baumobersubstrat für hochwertige Alleebäume und Solitärstandorte bis ca. 40 cm Baumgrubentiefe, sowie als spezielle Erdsubstratschicht unter einem Baumobersubstrat ab ca. 40 cm bis ca. 180 cm Baumgrubentiefe sowie als Moorbeetsubstrat, im Sinne einer Spezialerde für die besonderen Ansprüche beispielsweise von Azaleen und Rhododendren oder für Vegetationsformen mit ganz anders gelagerten Ansprüchen an das Substrat als Lebensgrundlage, ferner als Containersubstrat für die Pflanzenanzucht in Töpfen und Baumschulcontainern bzw. größeren Solitärcontainern, sowie als Drainmaterial für rasche Ableitung von Überschußwasser bei gleichzeitiger hoher Speicherung von pflanzenverfügbarem Wasser in Dränschichten. Dabei sind alle Substrate und Stoffe durch besondere Rezepturen so eingestellt, daß sie dem jeweiligen Verwendungszweck entsprechen und optimale Wachstumsbedingungen für die jeweiligen Pflanzenarten bringen.

In den folgenden drei Tabellen 1 bis 3 werden jeweils eine gewisse Anzahl unterschiedlicher Mischungsversuche mit verschiedenen losen, schüttfähigen Stoffen, hier sog. Erdsubstraten, aufgeführt, denen jeweils unterschiedlich viele grüne Kennzeichnungskörper in Form gebrochener Blähtonkörner mit 6 bis 10 mm Durchmesser hinzugefügt wurden. 100 Stück solcher grüner Kennzeichnungskörper besitzen ein Gewicht von ca. 17 Gramm. Für den Fachmann sind jedoch auch andere Gewichte- und Formen für die erfindungsgemäßen Kennzeichnungskörper denkbar. In einem besonderen Versuch wurden Kennzeichnungskörper eingesetzt, die die Form des Warenzeichens der Anmelderin/Patentinhaberin besitzen und die die gleiche gute Kennzeichnungs- und Identifikationsmöglichkeit gewährleisten. Es dürfte jedoch ohne weiteres einleuchten, daß auch andersfarbige Kennzeichnungskörper, auch aus anderen Materialien, ebenfalls in anderen Größen, ebenfalls geeignet sind und erfindungsgemäß wirken können. Hierzu wurden 100 bzw. 60 Liter Substrat in eine Mischtrommel gegeben, in die anschließend die in den Tabellen angegebenen Mengen der Kennzeichnungskörper hinzugefügt wurden. Die Mischtrommel wurde dann ca. 10 Minuten gedreht, um das Substratherstellungsverfahren zu simulieren, so daß eine gute Vermischung der Kennzeichnungskörper mit dem jeweiligen Substrat gewährleistet erschien. Daraufhin wurde das Gemisch vollständig in einen 1 qm großen Kasten überführt, dessen Seitenkantenhöhe 15 cm betrug. Mit einer Holzlatte wurde die Oberfläche des Gemisches glattgestrichen. Anschließend wurde durch Zählen ermittelt, wieviele Kennzeichnungskörper sichtbar waren, was in den Tabellen im einzelnen angeführt ist.

In einem weiteren Versuchsschritt wurde dann das Gemisch von oben mit einer Schlauchbrause gewässert, um natürliche Bedingungen, wie z.B. Regen, zu erzeugen bzw. nachzustellen. Anschließend wurde wiederum durch Zählen ermittelt, wieviele Kennzeichnungskörper nunmehr sichtbar sind. Die Werte sind in den Tabellen jeweils angegeben.

## TABELLE 1
optima$^{(R)}$-Intensiv-Substrat Typ I/01 für intensive Dachbegrünungen

| | | | Kennzeichnungs-körper | sichtbar/ trocken Stck/m$^2$ | sichtbar/ gewässert Stck/m$^2$ |
|---|---|---|---|---|---|
| 1.1 | 100 l | Substrat | 25 St. | 1 Stück | 3 Stück |
| 1.2 | 100 l | Substrat | 50 St. | 4 Stück | 5 Stück |
| 1.3 | 100 l | Substrat | 100 St. | 7 Stück | 13 Stück |
| 1.4 | 100 l | Substrat | 200 St. | 11 Stück | 21 Stück |

## TABELLE 2
optima$^{(R)}$-Tiefgaragen-Substrat Typ H 0/25

| | | | | | |
|---|---|---|---|---|---|
| 2.1 | 100 l | Substrat | 100 St. | 7 Stück | 12 Stück |
| 2.2 | 100 l | Substrat | 200 St. | 13 Stück | 29 Stück |

## TABELLE 3
optima$^{(R)}$Mineralsubstrat Typ M 2/10 (reine Blähtonkörper)

| | | | | | |
|---|---|---|---|---|---|
| 3.1 | 60 l | Substrat | 15 St. | 4 Stück | 4 Stück |
| 3.2 | 60 l | Substrat | 30 St. | 6 Stück | 8 Stück |
| 3.3 | 60 l | Substrat | 60 St. | 10 Stück | 11 Stück |
| 3.4 | 60 l | Substrat | 120 St. | 16 Stück | 16 Stück. |

Es ist selbstverständlich, daß, wenn viele Kennzeichnungskörper eingesetzt werden, wie es beispielsweise bei den Versuchen 1.3, 1.4, 2.1, 2.2 und 3.3 sowie 3.4 der Fall ist, auch entsprechend viele Kennzeichnungskörper an der Oberfläche des anschließend ausgebreiteten Materials identifiziert werden können. In praktischer Hinsicht sollten also bei ca. 100 l Substrat 25 Stück Kennzeichnungskörper ausreichen, da der Versuch 1.1 zeigt, daß anschließend 1 bzw. 3 Stück/m$^2$ sichtbar sind.

Bei den angesprochenen Substraten wird die Versuchsmenge von 25 Kennzeichnungskörpern pro 100 l Substrat als ausreichend angesehen. In rechnerischer Hinsicht ergibt sich daraus, daß für einen m$^3$ (= 1000 l) 250 Kennzeichnungskörper zu einem vernünftigen Resultat führen. Die Stückanzahl kann jedoch erfindungsgemäß auch verringert werden, beispielsweise auf 100 Fremd- oder Kennzeichnungskörper/m$^3$, sofern die anschließende Arbeit des Identifizierens nicht zu mühsam wird. Werte unter 100 Kennzeichnungskörper/m$^3$ sind deshalb auch noch denkbar. Andererseits ist es natürlich unwünschenswert, zu viele Kennzeichnungskörper den Substraten oder losen, schüttfähigen Stoffen beizugeben, da dieses Kosten verursacht und evtl. zu einem unwünschenswerten Aussehen führen kann. Für die oben angesprochenen Substrate erschien deshalb eine Obergrenze von 1000 Kennzeichnungskörper/m$^3$ angebracht. Auch dieser Wert ist jedoch keine definierte Obergrenze, da lose, schüttfähige Stoffe mit anderen Eigenschaften evtl. andere Stückzahlen an Kennzeichnungskörpern erforderlich machen können. Für den Fachmann läßt sich jedoch die wünschenswerte Menge an Kennzeichnungskörpern in einigen Versuchen leicht ermitteln.

**Patentansprüche**

1. Verfahren zum Kennzeichnen und Identifizieren von schüttfähigen Stoffen ihrer Herkunft und/oder Qualität nach,
gekennzeichnet durch folgende Merkmale:

(a) man nimmt ein aus einem oder mehreren der folgenden schüttfähigen Stoffen:

Torf, Kompost oder Humus und/oder mineralischen Stoffen, wie Ton, Stabilisatoren oder Düngemitteln, Bodenverbesserungsstoffen, Drainmaterial und Recycling-Stoffen, sowie Betonzuschlagstoffe bestehendes Substrat; und

(b) man fügt dem Substrat eine bestimmte Menge eines oder mehrerer natürlichen oder künstlichen, nicht, schwer oder leicht abbaubaren Fremd- oder Kennzeichnungskörper hinzu, in Form von farbigen Kugeln, gebrochenen (Ton)körpern, Scheiben oder Split, welche Fremd- oder Kennzeichnungskörper sich aufgrund ihrer Farbe oder Konsisstenz sichtbar von den losen, zu identifizierenden Stoffen abheben, ohne deren Funktion zu beeinträchtigen,

wobei man eine gute Vermischung der Kennzeichnungskörper mit dem Substrat gewährleistet, so daß die Identifizierung der schüttfähigen Stoffe durch bloße visuelle Beobachtung der sichtbaren Kennzeichnungskörper ermöglicht ist.

2. Verfahren nach Anspruch 1, dadurch gekennzeichnet, daß 10 bis 1000 Fremd- oder Kennzeichnungskörper pro m$^3$ Schüttstoffen zugesetzt werden.

3. Verfahren nach Anspruch 1, dadurch gekennzeichnet, daß die Fremdkörper aus Kunststoff, Pappe, Papier, Mais oder Kartoffelstärke bestehen.

4. Verfahren nach Anspruch 1, dadurch gekennzeichnet, daß die Kennzeichnungskörper in Form eines Logos und/oder Warenzeichens eingesetzt werden und einen Durchmesser von 2 bis 10 mm und/oder eine Dicke von 1 bis 10 mm besitzen.

5. Verwendung von einem oder mehreren natürlichen oder künstlichen, nicht, schwer oder leicht abbaubaren Fremd- oder Kennzeichnungskörpern, in Form von farbigen Kugeln, gebrochenen (Ton)körpern, Scheiben oder Split, zum Kennzeichnen und Identifizieren von schüttfähigen Stoffen ihrer Herkunft und/oder Qualität nach, welche schüttfähigen Stoffe ein Substrat darstellen, das aus einem oder mehreren der folgenden schüttfähigen Stoffen:

Torf, Kompost oder Humus und/oder mineralischen Stoffen, wie Ton, Stabilisatoren oder Düngmitteln und Bodenverbesserungsstoffen, Drainmaterial und Recycling-Stoffen, sowie Betonzuschlagstoffe besteht,

wobei sich die Fremd- oder Kennzeichnungskörper aufgrund ihrer Farbe oder Konsistenz sichtbar von den zu identifizierenden Stoffen abheben, ohne deren Funktion zu beeinträchtigen, so daß die Identifizierung der schüttfähigen Stoffe durch bloße visuelle Beobachtung der sichtbaren Kennzeichnungskörper ermöglicht ist.

**Claims**

1. Process für marking and identifying pourable materials with respect to their origin and/or quality, characterized by the following features:

(a) taking a substrate consisting out of one or more of the following pourable materials:

peat, compost or humus and/or mineral substances such as clay, stabilizers, soil improving substances, drain material and recycling substances, as well as concrete aggregates; and

(b) adding to the substrate a distinctive amount of natural or synthetic, not, difficulty or easily degradable foreign or marking bodies in the form of coloured balls, crushed (clay) bodies, disks or chips or splitted material, which as a result of their colour or consistency differ from the loose materials to be identified without impairing the function thereof, whereby a good mixture of the marking bodies with the substrate is guaranteed so that the identification of the pourable material is permitted by a visual observation of the visible marking bodies

2. Process according to claim 1, characterized in that 10 to 100 foreign or marking bodies are added per m$^3$ of bulk materials.

3. Process according to claim 1, characterized in that the foreign bodies are made from plastic, paper, board, corn or potatoe starch.

4. Process according to claim 1, characterized in that the marking bodies are used in the form of a logo and/or trademark and have a diameter of 2 to 10 mm and/or a thickness of 1 to 10 mm.

5. Use of one or more artificial or natural, not, difficultly or easily degradable or decomposable foreign or marking bodies in the form of coloured balls, crushed (clay) bodies, disks or chips or splitted material for marking and identifying pourable material with respect to their origin and/or quality, said pourable material being a substrate, consisting out of one or more of the following pourable materials:
peat, compost or humus and/or mineral substances such as clay, stabilizers, soil improving substances, drain material and recycling substances, as well as concrete aggregates;
whereby the foreign or marking bodies differing on the bais of their colours or consistency, without imparting the function thereof, so that the identification of the pourable material is permitted by a visual observation of the visible marking bodies

**Revendications**

1. Procédé pour caractériser et identifier des substances aptes à être mises en tas selon leur origine et/ou selon leur qualité,
caractérisé par les caractéristiques suivantes :
(a) on prend un substrat constitué par une ou plusieurs des substances suivantes aptes à être mises en tas :
tourbe, compost ou humus et/ou substances minérales, comme de l'argile, des stabilisateurs ou des engrais, des améliorants de sol, des matériaux de drainage et des matières de recyclage, ainsi que des adjuvants pour béton, et
(b) on ajoute au substrat une certaine quantité d'un ou de plusieurs corps étrangers ou de caractérisation naturels ou artificiels, non dégradables, difficilement ou facilement dégradables, sous forme de billes de couleur, de corps brisés (en argile), de rondelles ou de gravillons, corps étrangers ou de caractérisation qui se distinguent de manière visible par leur couleur ou leur consistance des substances non emballées, à identifier, sans en entraver la fonction, cependant que l'on garantit un bon mélange des corps de caractérisation au substrat, si bien que l'identification des matières aptes à être mises en tas est rendue possible par la simple observation visuelle des corps de caractérisation visibles.

2. Procédé selon la revendication 1, caractérisé en ce que 10 à 1000 corps étrangers ou de caractérisation sont ajoutés par m³ de substances en vrac.

3. Procédé selon la revendication 1, caractérisé en ce que les corps étrangers sont en matière plastique, en carton, en papier, en maïs ou en amidon de pomme de terre.

4. Procédé selon la revendication 1, caractérisé en ce que les corps de caractérisation sont utilisés sous forme d'un logo et/ou d'une marque et ont un diamètre de 2 à 10 mm et/ou une épaisseur d'1 à 10 mm.

5. Utilisation d'un ou de plusieurs corps étrangers ou de caractérisation naturels ou artificiels, non dégradables, difficilement ou facilement dégradables, sous forme de billes de couleur, de corps brisés (en argile), de rondelles ou de gravillons, pour caractériser et identifier des matières aptes à être mises en tas selon leur origine et/ou selon leur qualité, qui constituent un substrat pour les matières aptes à être mises en tas qui est constitué par l'une ou plusieurs des substances suivantes aptes à être mises en tas :
tourbe, compost ou humus et/ou substances minérales, comme de l'argile, des stabilisateurs ou des engrais, des améliorants de sol, des matériaux de drainage et des matières de recyclage, ainsi que des adjuvants pour béton,
les corps étrangers ou de caractérisation se distinguant de manière visible par leur couleur ou leur consistance des substances non emballées, à identifier, sans en entraver la fonction, si bien que l'identification des matières aptes à être mises en tas est rendue possible par la seule observation visuelle des corps de caractérisation visibles.